# EUROPEAN PATENT APPLICATION

(11) **EP 4 683 154 A1**
(43) Date of publication of application: **21.01.2026**
(21) Application number: 24189542.4
(22) Date of filing: 18.07.2024
(51) Int. Cl.: H02J 3/38, H02J 3/40, H02M 7/5387

(54) **METHOD FOR GENERATING A UNIFIED CONTROL SIGNAL FOR A POWER CONVERSION SYSTEM AND A POWER CONVERSION SYSTEM**

(71) Applicant: Hitachi Energy Ltd, 8050 Zürich (CH)
(72) Inventor: TAYYEBI, Ali, 72359 Västerås (SE)
(74) Representative: Vossius & Partner Patentanwälte Rechtsanwälte mbB

(57) **Abstract**

Embodiments of the present disclosure provide method (400) for generating a unified control signal (U_{unified}) for power conversion system of control system (100). Method (400) comprising: measuring (402) output voltage of power conversion system, and output current of power conversion system; generating (404) first input control signal (U₁,U_{1,processed}) from first control systems based on measured output voltage of power conversion system and measured output current of power conversion system; generating (406) second input control signal (U₂,U_{2,processed}) from second control systems based on measured output voltage of power conversion system and measured output current of power conversion system; generating (408) first control signal (KU₁,_{processed},K(t,Uₑₓₜₑᵣₙₐₗ)U₁) from first input control signal; generating (410) second control signal ((1-K)U_{2,processed}, (1-K(t,Uₑₓₜₑᵣₙₐₗ))U_{2,processed}) from second input control signal; and generating (412) unified control signal (U_{unified}) by using interfacing function, first control signal and second control signal.

## Description

### TECHNICAL FIELD

The present disclosure relates generally to a field of electric power generation and conversion. More particularly, it is related to a method for generating a unified control signal for a power conversion system, and a computer program product.

### BACKGROUND

Standard control architectures for power conversion system utilize a grid-following, GFL design approach, characterized by an explicit synchronization mechanism, such as a phase-locked loop, PLL. The GFL design approach also features robust power and current set-point tracking. With the increasing penetration of converter-based generation, an alternative architecture known as grid-forming, GFM control has emerged as a promising option for stabilizing modern power grids. The GFM design approach relies on an implicit synchronization mechanism through high-level control subsystems and provides inertial response and frequency control on fast timescales.

The control objectives for the power conversion system can be challenging, especially when the power conversion system needs to exhibit various features across a wide frequency range and adapt to time-varying grid conditions. Consequently, it may not always be possible to fully comply with grid codes and desired specifications.

### SUMMARY

Consequently, there is a need for an improved method to unify a Grid-Following, GFL and a Grid-Forming, GFM control systems. For instance, interfacing these control architectures via embedding multiple-input and multiple-output, MIMO nonlinear dynamic interfacing functions is a potential solution strategy. Furthermore, it may be beneficial to not only consider such interfacing (or unifying) control functions in the output stages but also across several layers of the GFL and GFM control architectures.

It is therefore an object of the present disclosure to provide a method for generating a unified control signal for a power conversion system, which mitigate, alleviate, or eliminate all or at least some of the above-discussed drawbacks of presently known solutions.

This and other objects are achieved by means of a method for generating a unified control signal for a power conversion system, a power conversion system and a computer program product, as defined in the appended claims. The term exemplary is in the present context to be understood as serving as an instance, example or illustration.

According to a first aspect of the present disclosure, a method for generating a unified control signal for a power conversion system is provided. The method comprising: measuring an output voltage of the power conversion system, and an output current of the power conversion system. The method further comprising generating a first input control signal from one or more first control systems based on the measured output voltage of the power conversion system and the measured output current of the power conversion system. The method further comprising generating a second input control signal from one or more second control systems based on the measured output voltage of the power conversion system and the measured output current of the power conversion system. The method further comprising generating a first control signal from the first input control signal; generating a second control signal from the second input control signal. The method further comprising generating the unified control signal by using at least one interfacing function, the first control signal and the second control signal.

Advantageously, embodiments herein unify and combine control architectures (GFL and GFM) to integrate their complementary benefits and enhance compliance of the power conversion system.

In some embodiments, the method comprises: generating the unified control signal by using a first variation signal and a second variation signal as an input to the at least one interfacing function, wherein the first variation signal comprises of a difference between the first input control signal and a Grid-Following, GFL measurement and wherein the second variation signal comprises of a difference between the second input control signal and a Grid-Forming, GFM measurement value.

Further, the embodiments herein propose implementation of Interfacing Control Functions (ICFs) between different control systems (first control system and second control system) that enable operation based on either the GFM structure, or GFL, or the unified control system. Further, the ICFs can allow for smooth transition between different control systems.

In some embodiments, the first control signals and the second control signals are generated according to respective control gains.

In some embodiments, a value of K in the respective control gains is equal to 0 or 1, or any positive real value between 0 and 1.

In some embodiments, the one or more first control systems comprise one or more Grid-Forming control systems and/or wherein the one or more second control systems comprise one or more Grid-Following control systems.

In an example, the one or more first control systems may comprise a general control system for grid-connected power conversion systems.

In some embodiments, the one or more first control systems are operated at least in time domains or in frequency domains, and/or wherein the one or more second control systems are operated at least in the time domains or in the frequency domains.

In some embodiments, the terms GFM and GFL signals, refers to the control or measurement signals that respectively belong to the GFM and GFL control systems.

In some embodiments, the first input control signal comprises at least one of: a GFM reference modulation signal, a GFM voltage reference value, a GFM active and reactive power reference value, and a GFM frequency and phase angle value and/or wherein the second input control signal comprises at least one of: a GFL reference modulation signal, a GFL voltage reference value, a GFL active and reactive power reference value, and a GFL frequency and phase angle value.

In some embodiments, the method comprises: calculating the unified control signal, based on the first input control signal, the second input control signal, and/or an external control signal, wherein the external control signal is obtained by using an estimation algorithm, based on estimating at least one of parameter associated with amount of inertia in a grid, grid strength, grid topology, and a grid impedance or admittance; and resetting the at least one interfacing function by modifying the control gains or required control functionality based on the external control signal in a time-varying and adaptive manner.

In some embodiments, the method comprises: controlling the power conversion system based on the generated unified control signal.

In some embodiments, the method comprises: creating a reference modulation signal from the unified control signal; producing gate signals from the reference modulation signal for gate driver circuit of the power conversion system; applying the gate signals to one or more semiconductor devices in the power conversion system; and producing a modified output voltage based on the gate signals.

In some embodiments, the method comprises: modifying at least one of a magnitude value, frequency value, and a phase angle value of the output voltage to produce the modified output voltage.

In some embodiments, the first input control signal, the second input control signal, measurements, the unified control signals, the external control signal, and estimated parameters comprises one-dimensional signals and parameters or multi-dimensional signals or parameters vectors or matrices with consistent dimensions.

The main advantage of the proposed embodiment is to combine advantages of different control systems/architectures such as the GFM systems/architectures and the GFL systems/architectures. For instance, the GFM architectures typically have faster synchronization while the GFL architectures have typically better current control performance. Furthermore, when connecting the power conversion system to a strong grid, the GFL architectures typically exhibit enhanced stability, on the other hand the GFM architectures exhibit enhanced robustness when the power conversion system is connected to a weak grid. By the proposed method, the control system (also refer to as unified control architecture) combines all the aforementioned benefits, and beyond.

According to a second aspect of the present disclosure there is provided a power conversion system, comprising: a processing circuitry, wherein the processing circuitry is configured to perform the method of the first aspect.

Advantageously, embodiments herein provide a framework to combine system/device-level advantages of the GFM and GFL based control systems.

According to a third aspect there is provided a computer program product comprising instructions which, when the program is executed by a computing device comprising an I/O unit and a processing unit, wherein the I/O unit is operable to generate control signals for a power conversion system, and to measure voltages and currents of the power conversion system, and cause the computing device to function as controller for the power conversion system, and wherein the instructions causes the computing device to perform the method according to the first aspect.

Effects and features of the second and third aspects are to a large extent analogous to those described above in connection with the first aspect. Embodiments mentioned in relation to the first aspect are largely compatible with the second and the third aspects.

Therefore, the embodiments herein propose implementation of interfacing functions (ICFs) between different control systems (first control system and second control system) that enable operation based on either a GFM control system, or GFL control system, or the unified control system. Further, the ICFs allow for smooth transition between different control systems.

Other advantages may be readily apparent to one having skill in the art. Certain embodiments may have some, or all the recited advantages.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
FIG. 1 discloses a schematic block diagram illustrating an example control system;
FIG. 2A discloses a schematic block diagram illustrating an example interfacing function without an external input signal or estimated parameters according to some embodiments;
FIG. 2B discloses a schematic block diagram illustrating an example interfacing function with an external input signal or estimated parameters according to some embodiments;
FIG. 3 discloses a schematic block diagram illustrating an example model configuration of a closed-loop grid-connected power conversion system according to some embodiments; and
FIG. 4 is a flowchart illustrating example steps for a method for generating a unified control signal for a power conversion system according to some embodiments.

### DETAILED DESCRIPTION

Aspects of the present disclosure will be described more fully hereinafter with reference to the accompanying drawings. The disclosed method for generating a unified control signal for a power conversion system, a power conversion system and a computer program product herein can, however, be realized in many different forms and should not be construed as being limited to the aspects set forth herein. Like numbers in the drawings refer to like elements throughout.

The terminology used herein is for the purpose of describing particular aspects of the disclosure only, and is not intended to limit the invention. It should be emphasized that the term "comprises/comprising" when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the examples set forth herein.

In the following description of exemplary embodiments, the same reference numerals denote the same or similar components.

Recent studies have revealed a duality between the GFL and the GFM control architectures, suggesting that they may potentially enable complementary benefits for the power conversion system. [Reference: Revisiting Grid-Forming and Grid-Following Inverters: A Duality Theory, IEEE, https://ieeexplore.ieee.org/abstract/document/9714816] Therefore, one can envision a combination of these control architectures as a promising solution. For instance, one existing approach is a hard-switching approach depending on the control objectives and operating conditions. The hard-switching approach may include a switching component between different control architectures at their output stages. However, such hard-switching approach may jeopardize the overall stability of the power conversion system.

In contrast to the prior art, embodiments herein unify a grid-following, GFL and a grid-forming, GFM control systems via multiple-input and multiple-output, MIMO nonlinear dynamic interfacing functions. The embodiments herein provide a method for generating a unified control signal for a power conversion system.

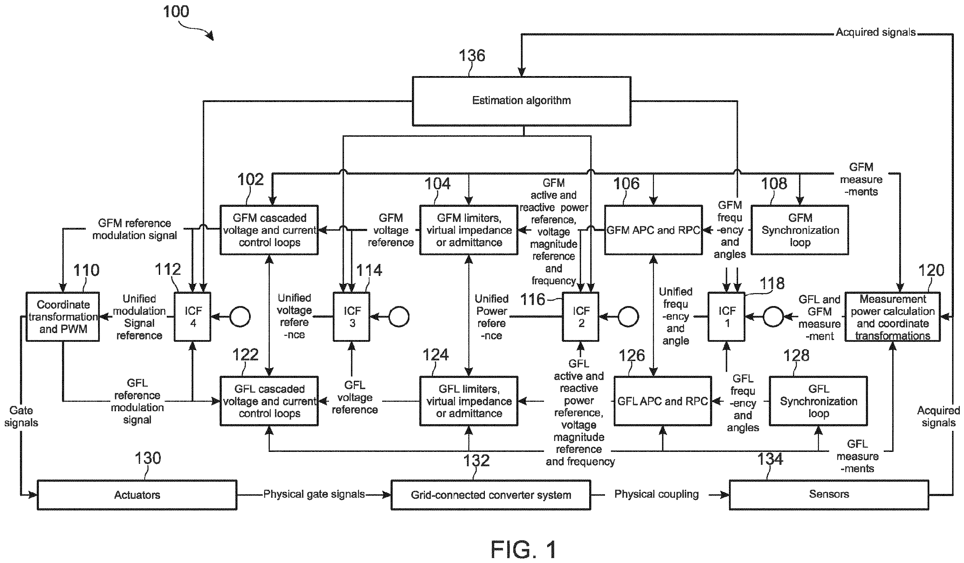

In an embodiment, FIG. 1 discloses a schematic block diagram illustrating an example control system (100) (also may referred to as unified control system). The control system (100) comprises one or more first control systems and one or more second control systems. In an example, the one or more first control systems comprise one or more Grid-Forming, GFM control systems and the one or more second control system comprise one or more Grid-Following, GFL control systems. In an example, the one or more first control systems may comprise a general control system for grid-connected power conversion systems. The first control system herein after referred to as the GFM control system and the second control system herein after referred to as the GFL control system. Further, the GFM control system and the GFL control system may include other subsystems (not shown in FIGs.) such as oscillation damping control blocks, harmonic cancellation/compensation blocks, estimation and signal processing blocks. The estimation subsystem, processing subsystem, and control subsystems are associated with controlling the power conversion system under unbalanced AC conditions.

The GFM control system is a set of control units that measures alternative current, AC signals of the power conversion system such as voltage and currents and creates a set of pulse width modulation, PWM signals for the power conversion system. The GFM control systems, renders the power conversion system to behave as a controllable voltage source behind an impedance with the capability to establish independent AC voltage and frequency. In an example, the set of control units of the GFM control systems may comprise the GFM synchronization loop (108), the GFM active power control, APC and reactive power control, RPC unit (106), the GFM limiters and virtual impedance/admittance unit (104) and the GFM cascaded voltage and current control unit (102), as shown in FIG. 1.

The second control system or the GFL control system comprise a set of control units that measures AC signals such as voltage and currents of the power conversion system and creates a set of PWM signals for the power conversion system. The GFL control system, renders the power conversion system to behave as a controllable current source behind an impedance with the capability to lock onto and follow the power grid AC voltage and frequency. In an example, the set of control units of the GFL control systems may comprise the GFL synchronization loop (128), the GFL active power control, APC and reactive power control, RPC unit (124), the GFL limiters and virtual impedance/admittance unit (124), and the GFL cascaded voltage and current control unit (122), as shown in FIG. 1.

The control system (100) further comprises a plurality of interfacing control functions, ICFs, such as ICF1 (118), ICF2 (116), ICF3 (114) and ICF4 (112), as shown in FIG. 1. The number of ICFs in the control system (100) are not limited to a specific number such as 4 as shown in FIG. 1, i.e., many ICFs can be included in the control system (100) as necessary.

The control system (100) further comprises a coordinate transformation and Pulse-width modulation, PWM unit (110) and actuators (130). A grid connected converter system (132) (herein after referred to as the power conversion system (132) is physically coupled with sensors (134). In an example, the power conversion system (132) may include and not limited to an inverter, a converter, a direct current, DC- alternative current, AC power conversion system or other conversion machines like synchronous machines.

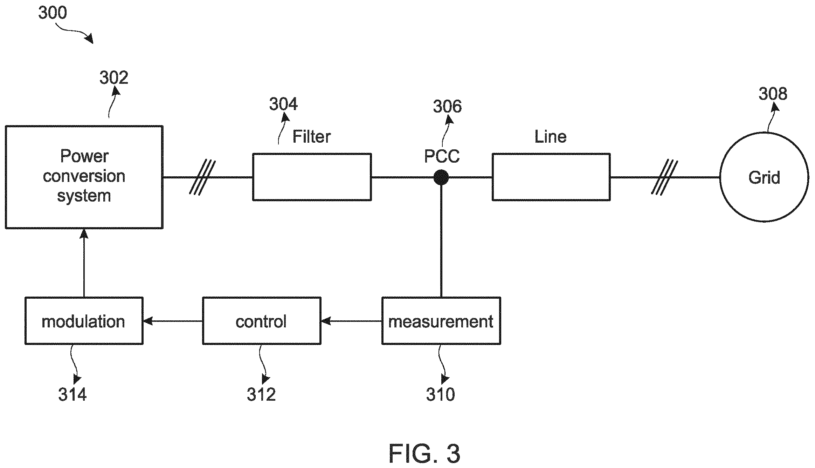

As shown in FIG. 1, the measurement, power calculation, and coordinate transformation unit (120) receive acquired signals form the sensors (134). The acquired signals comprise output voltage of the power conversion system (132), and an output current of the power conversion system (132), sensed by the sensors (134). In an example, the acquired signals comprise three-phase current and voltages at a point of common coupling, PCC (later shown in FIG. 3) of the power conversion system (132). Then, the measurement, power calculation, and coordinate transformation unit (120) perform required computations such as active and reactive power calculations. The measurement, power calculation, and coordinate transformation unit (120) further filters three-phase quantities or measured quantities such as the three-phase current and voltages if needed, and also transform the three-phase quantities to desired coordinate systems such as dq0 or αβ0. The measurement, power calculation, and coordinate transformation unit (120) provides GFL and GFM measurements to the ICFs (ICF1 (118), ICF2 (116), ICF3 (114) and ICF4 (112)) after the initial processing of the three-phase quantities for one or more first control system and one or more second control system. The measurement, power calculation, and coordinate transformation unit (120) communicate with almost all the control units of the control system (100). As shown in FIG. 1, circles denote collection of the GFL and GFM measurements required for the GFM control systems and the GFL control systems. That may or may not be used by the ICFs, but they are nonetheless communicated to all the ICFs.

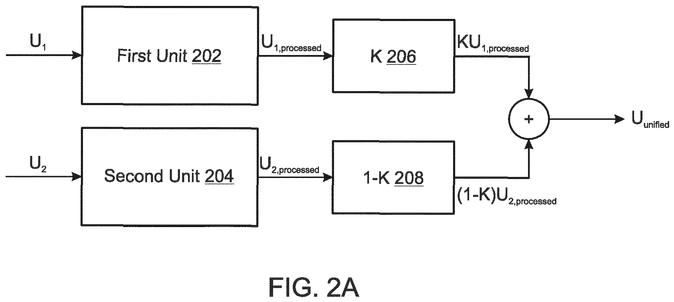

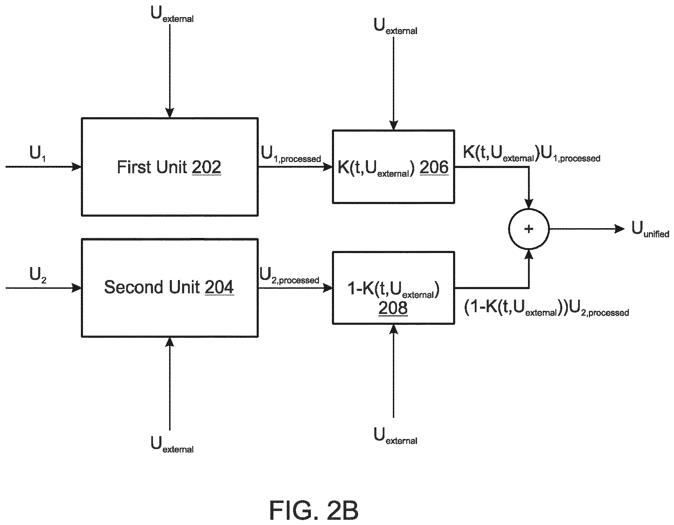

Further, one or more first input control signals (later shown in FIG. 2 as U1, U_{1,processed}) are generated from the one or more GFM control units (102, 104, 106, 108) of the GFM control system based on the measured output voltage of the power conversion system (132) and the measured output current of the power conversion system (132). In an example, the first input control signal comprises at least one of: a GFM reference modulation signal, a GFM voltage reference value, a GFM active and reactive power reference value, and a GFM frequency and phase angle value.

Similarly, one or more second input control signals (later shown in FIG. 2 as U₂, U_{2,processed}) are generated from the one or more GFL control units (122, 124, 126, 128) of the GFM control system based on the measured output voltage of the power conversion system (132) and the measured output current of the power conversion system (132). In an example, the second input control signal comprises at least one of: a GFL reference modulation signal, a GFL voltage reference value, a GFL active and reactive power reference value, and a GFL frequency and phase angle value. As shown in FIG. 1, circles denote collection of the GFL and GFM measurements required for the GFM control systems and the GFL control systems.

In an embodiment, the first control signal (later shown in FIG. 2A as KU_{1,processed}, K(t,Uₑₓₜₑᵣₙₐₗ)U₁) is generated from the first input control signal through the ICFs. Similarly, a second control signal (later shown in FIG. 2A as (1-K)U_{2,processed}, (1-K(t,Uₑₓₜₑᵣₙₐₗ))U_{2,processed}) is generated from the second input control signal. A unified control signal (U_{unified}) is generated for the power conversion system (132) by using at least one interfacing function from the plurality of ICFs, the first control signal and the second control signal. In an example, K is a function of time and Uₑₓₜₑᵣₙₐₗ.

In some embodiments, the one or more first control systems are operated at least in time domains or in frequency domains, and/or wherein the one or more second control systems are operated at least in the time domains or in the frequency domains.

In some embodiments, the terms GFM and GFL signals, refers to the control or measurement signals that respectively belong to the GFM and GFL control systems.

In some embodiments, the unified control signal (U_{unified}) is generated by using a first variation signal and a second variation signal as an input to the at least one interfacing function. The first variation signal comprises of a difference between the first input control signal (U₁) and a Grid-Following, GFL measurement value (U₃) (not shown in FIGs.). The GFL measurement value comprises measurement required by the one or more second control system. The second variation signal comprises of a difference between the second input control signal (U₂) and a Grid-Forming, GFM measurement value (U₄) (not shown in FIGs.). The GFM measurement value comprises measurement required by the one or more first control system. The first control signals and the second control signals are generated according to respective control gains (K, 1-K (later shown in FIG. 2A). A value of K in the respective control gains (K, 1-K) is equal to 0 or 1, or any positive real value between 0 and 1. Further in an example, K and 1-K with K between 0 and 1 may result in a convex combination of the provided inputs (i.e. first variation signal and second variation signal). In an example, if x1 and x2 are the input signals, then y= K x1 + (1-k) x2 is a convex combination of x1 and x2 if 0<k<1.

The GFM synchronization loop (108) defines frequency of the power conversion system (132) based on the received GFM measurements (that are typically active and reactive powers and PCC voltage in desired coordinate frame) while synchronizing with the power grid frequency at the PCC. In an example, the GFM synchronization loop (108) may include and not limited to a power-frequency droop control, virtual synchronous machine, VSM, power synchronization control, PSC, and an oscillator-based GFM methods, among others. Once the frequency of the power conversion system (132) is defined, the frequency is integrated to compute a phase angle of the power conversion system (132). The frequency and phase angle output of GFM synchronization loop (108) are sent to GFM APC and RPC unit (106) and the ICF 1 (116), as shown in FIG. 1.

In an embodiment, the GFL synchronization loop (128) locks onto the power grid measure voltage at the PCC, thus extracting the grid frequency up to certain approximations. However, the GFL synchronization loop (128) comprises a phase-locked loop, PLL that provides the frequency of power conversion system (132) based on PCC voltage in a desired coordinate frame, and finally integrates the frequency to derive a phase angle of the power conversion system (132). In an example, the PLLs can be synchronous reference frame, SRF or double decoupled SRF, DDSRF, among many other types of explicit synchronization mechanisms. The output such as the frequency and phase angle of the GFL synchronization loop (128) is sent to the GFL APC and RPC unit (126) as well as the ICF 1 (116).

The phase angle and the frequencies obtained from the GFM synchronization loops (108) and GFL synchronization loops synchronization loops (128) may be used to realize any control subsystems in the control system (100) in rotating dq0 frame, if necessary.

The ICF 1 (116) receives the GFL and GFM measurements signals as well as the outputs of GFM synchronization loops (108) and the GFL synchronization loops (128). The ICF 1 (116) then define a unified angle and unified frequency according to one of potential ICF types. Details of the ICF types are described later in FIG. 2A and FIG. 2B.

The unified angle and the unified frequencies obtained from the GFM synchronization loops (108) and GFL synchronization loops synchronization loops (128) may be used to realize any control subsystems in the control system (100) in rotating dq0 frame, if necessary.

The GFM APC and RPC unit (106) takes the GFM measurements, GFM and unified angle and frequencies, and defines the active and reactive power references for the lower-level GFM controls.

The GFL APC and RPC unit (126) takes the GFL measurements, GFL and unified angle and frequencies, and defines the active and reactive power references for the lower-level GFL controls.

The ICF 2 (114) receives output of the GFM APC and RPC unit (106), output of the GFL APC and RPC APC and RPC unit (126), the GFM measurements and the GFL measurements.

Accordingly, the ICF 2 (114) defines the unified active and reactive power references based on one of the potential ICF types.

In some embodiments, in the control system (200), the GFM synchronization loops (108) and GFL synchronization loops synchronization loops (128) can be merged with the GFM APC and RPC unit (106) and GFL APC and RPC APC and RPC unit (126) which in this case results in a high-level control block that takes care of synchronization and power control of the power conversion system (132).

In some embodiments, in the control system (200), the output of the GFM APC and RPC unit (106) and GFL APC and RPC APC and RPC unit (126) to the ICF2 (114) and other subsequent blocks may be voltage magnitude and frequency.

The benefits of the ICFs may extend beyond the particular arrangement of the control blocks of control system (100) as shown in FIG 1. Further, the ICFs can be applied to other types of GFM and GFL architecture of the existing art.

The GFM limiters and virtual impedance/admittance unit (104) defines the voltage reference in the desired coordinate frame for the lower-level GFM loops while taking into account the physical limitation such as power limitation or current limitation of the power conversion system (132).

The GFL limiters and virtual impedance/admittance unit (124) fulfils the same objective as the GFM limiters and virtual impedance/admittance unit (104) for the GFL control systems.

The ICF 3 (114) takes output of the GFM limiters and virtual impedance/admittance unit (102), output of the GFL limiters and virtual impedance/admittance unit (124), the GFM measurements and the GFL measurements to compute the unified voltage reference based on one of potential ICF types. In an example, the output of the GFM limiters and virtual impedance/admittance unit (102) can be the GFM voltage reference value and the output from the GFL limiters and virtual impedance/admittance unit (124) can be the GFL voltage reference value.

The GFM cascaded voltage and current control unit (102) defines the reference modulation signal for the coordinate transformation and PWM unit (110) (i.e., the lowest-level in the GFM control system that coincides with lowest-level of the GFM control system).

The GFL cascaded voltage and current control unit (122) defines the reference modulation signal for the coordinate transformation and PWM (110) for the GFL control system.

The ICF 4 unit 112 takes the output of the GFM cascaded voltage and current control unit (102), output of the GFL cascaded voltage and current control unit (122), the GFM measurements and the GFL measurements into account and defines the unified reference modulation signal according to one of the ICF types.

Alternatively. the GFM limiters and virtual impedance/admittance unit (104) and the GFM limiters and virtual impedance/admittance unit (102), the GFL limiters and virtual impedance/admittance unit (124) and the GFL cascaded voltage and current control unit (122) can be combined to form low-level control blocks while fulfilling the same objectives as in the description.

The coordinate transformation and PWM unit (110) takes the output of the GFM cascaded voltage and current control unit (102), output of the GFL cascaded voltage and current control unit (122), output of the ICF 4 (112) and defines gate signals in the desired coordinates system that are communicated to the actuators (130) (also referred to as physical control actuators). In an example, the output of the GFM cascaded voltage and current control unit (102) comprises the GFM reference modulation signal and the output of the GFL cascaded voltage and current control unit (122) comprises the GFM reference modulation signal. In an example, the output of the ICF 4 (112) is the unified reference modulation signal.

Advantageously, embodiments herein unify and combine multiple control systems (GFL and GFM) to integrate their complementary benefits and enhance compliance of the power conversion system (132). Further, the embodiments herein provide a hybrid GFM-GFL synchronization, black-start, islanding and anti-islanding capabilities.

Further, the embodiments herein provide implementation of interfacing functions (ICFs) between different control systems (first control system and second control system) that enable operation based on either the GFM structure, or GFL, or the unified control system. Further, the ICFs allow for smooth and seamless transition between different control systems.

In an embodiment, in the control system (100), the acquired signals can be provided to an estimation layer/algorithm (136) to generate an external control signal (Uₑₓₜₑᵣₙₐₗ) or estimated parameter. The output of the estimation layer/algorithm (136), the external control signal (Uₑₓₜₑᵣₙₐₗ) can be provided to the ICFs (ICF 1, ICF 2, ICF 3, ICF 4). The external control signal (Uₑₓₜₑᵣₙₐₗ) is obtained by using an estimation algorithm, based on estimating at least one of parameter associated with amount of inertia in a grid, grid strength, grid topology, and a grid impedance. The resetting of the interfacing function can be performed by modifying the control gains (K and 1-K) based on the external control signal (Uₑₓₜₑᵣₙₐₗ) in a time-varying manner. Further, the control and processing functions in the ICFs can be enabled or disabled according to external control signal (Uₑₓₜₑᵣₙₐₗ) in an adaptive manner.

In an example, different control units of the control system (100) are implemented in different Digital Signal Processors, DSPs. However, the DSPs can be separated into different sets such as: the control units of the GFM control system can be implemented in one set of DSPs, similarly the control units of the GFL control system can be implemented in one set of DSPs and the ICFs, measurement, and the coordinate transformation and PWM unit (110) can be implemented in one set of DSPs.

Advantageously, embodiments herein unify and combine control systems/architectures (GFL and GFM) to integrate their complementary benefits and enhance compliance of the power conversion system. The present embodiments do not only disclose a method to generate a control signal, but also a control system (100) (also may referred to a unified control architecture) that produces unified control signals.

FIG. 2A discloses a schematic block diagram illustrating an example interfacing function as without an external input signal or estimated parameters according to some embodiments. The interfacing function is similar to one of the ICFs as discussed in FIG. 1. As shown in FIG. 2A, the first input control signal (U₁) and the second control signal (U₂) are provided to a first control unit (202) (also may referred to as first unit (202)) and to a second control unit (204) (also may referred to as second unit (204)). In an example, each of the first unit 202 and the second unit (204) may comprise at least one of a filter, a controller, an arithmetic function and or an identity gain. The output of the first unit (202) and the second unit (204) are the first input control signal (U_{1, processed}) and (U_{2, processed}), which are provided to their to respective control gains (K, 1-K) (206, 208) to generate the first control signal (KU_{1,processed}) and the second control signal ((1-K)U_{2,processed}). In an example, a value of K in the respective control gains (K, 1-K) (206, 208) is equal to 0 or 1, or any positive real value between 0 and 1. The unified control signal (U_{unified}) is generated by using at least one interfacing function, the first control signal (KU_{1,processed}) and the second control signal ((1-K)U_{2,processed}).

FIG. 2B discloses a schematic block diagram illustrating an example interfacing function with an external input signal or estimated parameters according to some embodiments. The interfacing function is similar to one of the ICFs as discussed in FIG. 1. As shown in FIG. 2B, the first input control signal (U₁) and the second control signal (U₂) and external control signals (Uₑₓₜₑᵣₙₐₗ) are provided to the first unit (202) and to the second unit (204). In an example, each of the first unit 202 and the second unit (204) may comprise at least one of a filter, a controller, an arithmetic function and or an identity gain. The output of the first unit (202) and the second unit (204) are the first input control signal (U_{1, processed}) and (U_{2, processed}), which are provided to their respective control gains (K, 1-K) (206, 208) to generate the first control signal (K(t,Uₑₓₜₑᵣₙₐₗ)U_{1,processed}) and the second control signal ((1-K(t,Uₑₓₜₑᵣₙₐₗ))U_{2, processed}). The unified control signal (U_{unified}) is generated by using the at least one interfacing function, the first control signal (K(t,Uₑₓₜₑᵣₙₐₗ)U_{1,processed}), the second control signal ((1-K(t,Uₑₓₜₑᵣₙₐₗ))U_{2, processed}) and the external control signal (Uₑₓₜₑᵣₙₐₗ).

The unified control signal (U_{unified}) can allow to consider a weighted average of the provided inputs, or a weighted average of the provided inputs after some filtering, processing, or possibly control actions (please see the example of ICFs). Futher, the unified control signals (U_{unified}) allow to pass either of the inputs if K=1 or K=0. Finally, when considering the external input, i.e., Uₑₓₜₑᵣₙₐₗ, the unified control signal can dynamically and smoothly change from the first input signal (U₁) (or its processed/filtered/controlled version) to the second input signal (or its processed/filtered/controlled version) or to a weighted average of both with time-varying weights. Finally, when seen in more complex control architectures, the unified signals obtained from the ICFs, allow to combine the control features of different architectures or control systems.

Advantageously, embodiments herein provide smooth transition from one control system to another control system by scheduling the ICFs. Further, the embodiments herein provide unifying mixed frequency and time-domain control systems.

FIG. 3 discloses a schematic block diagram illustrating an example model configuration (300) of power conversion system (302) according to some embodiments. The model configuration (300) is an alternate exemplary implementation of the control system (100). The power conversion system (302) comprises a closed-loop grid-connected power conversion system. The power conversion system (302) is connected to an output filter (304) and then connected to a power grid (308) at a point of common coupling, PCC (306). In an example, a three-phase PCC voltage and current are typically measurand in a measurement unit (310) and used in power conversion system (302) to define the reference value for a modulation unit (314). Finally, the modulation unit (314) creates control signals based on the reference value. The control signals are applied to the power conversion system (302) to achieve certain control and performance objective.

The control system (100) as shown in FIG. 1 includes the ICFs which generate the unified control signals based on the GFM control signals and measurements, and GFM control signals and measurements, and possibly external signals or estimated parameters, create a reference modulation signal for the power conversion system (132). The reference modulation signal is typically used in a PWM generation control system that produces the gate signals for the power conversion system (132) gate driver hardware. The gate driver hardware applies the gate signals to semiconductor devices in the power conversion system. As a result, the power conversion system (302) voltage behind the filter (304) is produced according to the reference modulation signal, as shown in FIG. 3. Therefore, the control system (100) as shown in FIG. 1 can modify the magnitude, the frequency, and the phase angle of the voltage behind the filter (304) by designing the GFL control systems and the GFM control systems, the ICFs, and the estimation layer in an appropriate manner such that certain system-level objectives are met. In an example, such objectives may include and not limited to be power flow regulation, PCC voltage control, inertia support provision, fault current provision, active power and frequency drooping behaviour, reactive power and voltage drooping behaviour, virtual inertia provision, fast frequency response, virtual impedance and or admittance provision, among others.

In an embodiment, the power conversion system (302) as shown in FIG. 3, can be disconnected from the power grid (308) and connected to a local load connected to the PCC (306) or connect to an islanded grid or microgrid at the PCC (306). Therefore, the features of the unified control signals are also applicable when considering islanded and/or off-grid power converter applications.

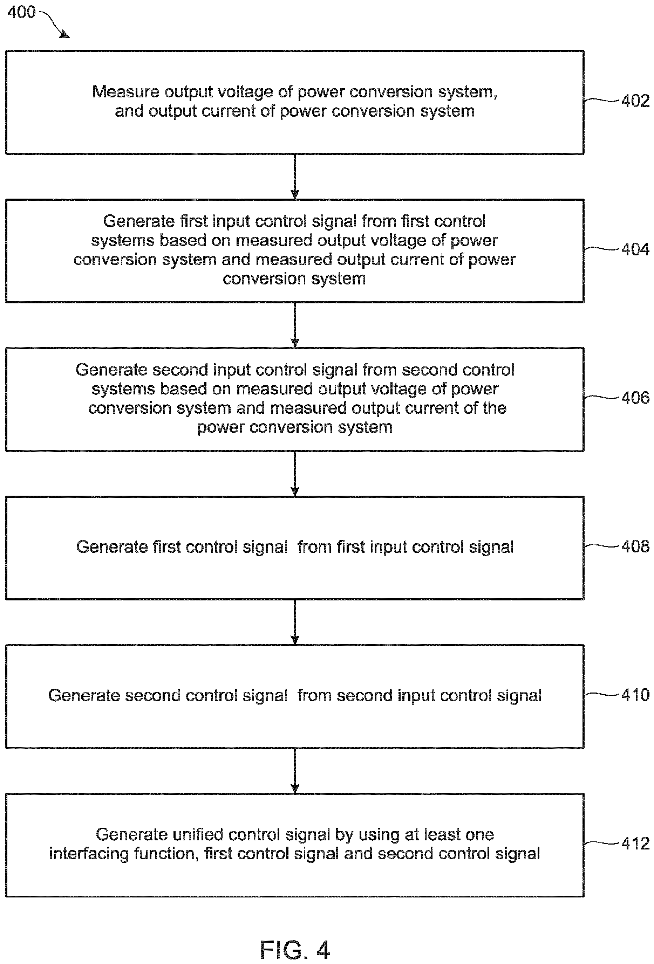

FIG. 4 is a flowchart illustrating example steps for a method (400) for generating a unified control signal for the power conversion system according to some embodiments.

The order in which the steps of the method (400) is described is not intended to be construed as a limitation, and any number of the described method steps may be combined in any order to implement the method (400) or alternate methods. Additionally, individual steps may be deleted from the method (400) without departing from the scope of the invention as defined in the claims.

At step (402), the method (400) comprises the output voltage of the power conversion system, and the output current of the power conversion system.

At step (404), the method (400) comprises generating the first input control signal (U₁, U_{1,processed}) from the one or more first control systems based on the measured output voltage of the power conversion system and the measured output current of the power conversion system.

At step (406) the method (400) comprises generating the second input control signal (U₂, U_{2,processed}) from the one or more second control systems based on the measured output voltage of the power conversion system and the measured output current of the power conversion system.

At step (408), the method (400) comprises generating the first control signal (KU_{1,processed}, K(t,Uₑₓₜₑᵣₙₐₗ)U_{1,processed}) from the first input control signal.

At step (410), the method (400) comprises generating the second control signal ((1-K)U_{2,processed}, (1-K(t,Uₑₓₜₑᵣₙₐₗ))U_{2, processed}) from the second input control signal.

At step (412), the method (400) comprises generating the unified control signal (U_{unified}) by using at least one interfacing function, the first control signal and the second control signal.

The additional details of the method (400) are similar to the details of the control system (100) and hence are not repeated for the sake of brevity.

In some embodiment, the method (400) comprises: generating the unified control signal (U_{unified}) by using a first variation signal and a second variation signal as an input to the at least one interfacing function. The first variation signal comprises of a difference between the first input control signal (U₁) and a Grid-Following, GFL measurement value and the second variation signal comprises of a difference between the second input control signal (U₂) and a Grid-Forming, GFM measurement value.

In some embodiment, the first control signals and the second control signals are generated according to respective control gains (K, 1-K).

In some embodiment, the value of K in the respective control gains (K, 1-K) is equal to 0 or 1, or any positive real value between 0 and 1.

In some embodiment, the one or more first control systems comprise one or more Grid-Forming (GFM) control systems and/or wherein the one or more second control systems comprise one or more Grid-Following (GFL) control systems.

In some embodiment, the one or more first control systems are operated at least in time domains or in frequency domains, and/or the one or more second control systems are operated at least in the time domains or in the frequency domains.

In some embodiments, the terms GFM and GFL signals, refers to the control or measurement signals that respectively belong to the GFM and GFL control systems.

In some embodiment, the first input control signal comprises at least one of: the GFM reference modulation signal, the GFM voltage reference value, the GFM active and reactive power reference value, and the GFM frequency and phase angle value and/or wherein the second input control signal comprises at least one of: the GFL reference modulation signal, the GFL voltage reference value, the GFL active and reactive power reference value, and the GFL frequency and phase angle value.

In some embodiment, the method (400) comprises: calculating the unified control signal (U_{unified}), based on the first input control signal (U1), the second input control signal (U2), and/or an external control signal (Uₑₓₜₑᵣₙₐₗ). The external control signal (Uₑₓₜₑᵣₙₐₗ) is obtained by using an estimation algorithm, based on estimating at least one of parameter associated with amount of inertia in a grid, grid strength, grid topology, and a grid impedance or admittance; and resetting the at least one interfacing function by modifying the control gains (K and 1-K) or required control functionality based on the external control signal (Uₑₓₜₑᵣₙₐₗ) in a time-varying and adaptive manner.

In some embodiment, the method (400) further comprising: controlling the power conversion system based on the generated unified control signal (U_{unified}).

In some embodiment, the method (400) further comprising: creating a reference modulation signal from the unified control signal; producing gate signals from the reference modulation signal for gate driver circuit of the power conversion system; applying the gate signals to one or more semiconductor devices in the power conversion system; and producing a modified output voltage based on the gate signals.

In some embodiment, the method (400) further comprising: modifying at least one of a magnitude value, frequency value, and a phase angle value of the output voltage to produce the modified output voltage.

In some embodiment, the first input control signal (U₁), the second input control signal (U₂), measurements, the unified control signals (U_{unified}), the external control signal (Uₑₓₜₑᵣₙₐₗ), and estimated parameters comprises one-dimensional signals and parameters or multi-dimensional signals or parameters vectors or matrices with consistent dimensions. In an example, the control gain parameters K and 1-K may be replaced accordingly by parameter matrices of a compatible dimensions.

Advantageously, embodiments herein unify and combine control architectures (GFL and GFM) to integrate their complementary benefits and enhance compliance of the power conversion system.

In an embodiment, the control system (100) comprises a processing circuitry (not shown in FIGs.). The processing circuitry is configured to perform the method steps (402 to 412) as discussed in FIG. 4.

Advantageously, embodiments herein provide a systematic framework to combine system/device-level advantages of the GFM and GFL based control systems.

In an embodiment, a computer program product is described. The computer program product comprising instructions which, when the program is executed by a computing device comprising an I/O unit and a processing unit, wherein the I/O unit is operable to generate control signals for the power conversion system, and to measure voltages and currents of the power conversion system and cause the computing device to function as controller for the power conversion system. The instructions cause the computing device to perform the method according to the method 400 as discussed in FIG. 4.

The foregoing description of the specific embodiments will so fully reveal the general nature of the embodiments herein that others can, by applying current knowledge, readily modify and/or adapt for various applications such specific embodiments without departing from the generic concept, and, therefore, such adaptations and modifications should and are intended to be comprehended within the meaning and range of equivalents of the disclosed embodiments. It is to be understood that the phraseology or terminology employed herein is for the purpose of description and not of limitation. Therefore, while the embodiments herein have been described in terms of preferred embodiments, those skilled in the art will recognize that the embodiments herein can be practiced with modification within the scope of the disclosure.

## Claims

1. A method (400) for generating a unified control signal (U_{unified}) for a power conversion system (132) of a control system (100), the method comprising:
measuring (402) an output voltage of the power conversion system (132), and an output current of the power conversion system (132);
generating (404) a first input control signal (U₁, U_{1,processed}) from one or more first control systems based on the measured output voltage of the power conversion system (132) and the measured output current of the power conversion system (132);
generating (406) a second input control signal (U₂, U_{2,processed}) from one or more second control systems based on the measured output voltage of the power conversion system (132) and the measured output current of the power conversion system (132);
generating (408) a first control signal (KU_{1,processed}, K(t,Uₑₓₜₑᵣₙₐₗ)U_{1,processed}) from the first input control signal;
generating (410) a second control signal ((1-K)U_{2,processed}, (1-K(t,Uₑₓₜₑᵣₙₐₗ))U_{2, processed}) from the second input control signal; and
generating (412) the unified control signal (U_{unified}) by using at least one interfacing function, the first control signal and the second control signal.

2. The method (400), according to claim 1, further comprising:
generating the unified control signal (U_{unified}) by using a first variation signal (U1-U3) and a second variation signal (U2-U4) as an input to the at least one interfacing function,
wherein the first variation signal (U1-U3) comprises of a difference between the first input control signal (U1) and a Grid-Following, GFL measurement value (U3) and
wherein the second variation signal (U2-U4) comprises of a difference between the second input control signal (U2) and a Grid-Forming, GFM measurement value (U4).

3. The method (400), according to claim 1, wherein the first control signals and the second control signals are generated according to respective control gains (K, 1-K).

4. The method (400), according to claim 3, wherein a value of K in the respective control gains (K, 1-K) is equal to 0 or 1, or any positive real value between 0 and 1.

5. The method (400), according to claim 1, wherein the one or more first control systems comprise one or more Grid-Forming (GFM) control systems and/or wherein the one or more second control systems comprise one or more Grid-Following (GFL) control systems.

6. The method (400), according to any of the preceding claims, wherein the one or more first control systems are operated at least in time domains or in frequency domains, and/or wherein the one or more second control systems are operated at least in the time domains or in the frequency domains.

7. The method (400), according to any of the preceding claims, wherein the first input control signal comprises at least one of: a GFM reference modulation signal, a GFM voltage reference value, a GFM active and reactive power reference value, and a GFM frequency and phase angle value and/or
wherein the second input control signal comprises at least one of: a GFL reference modulation signal, a GFL voltage reference value, a GFL active and reactive power reference value, and a GFL frequency and phase angle value.

8. The method (400), according to claim 1, further comprising:
calculating the unified control signal (U_{unified}), based on the first input control signal (U1),
the second input control signal (U2), and/or an external control signal (Uₑₓₜₑᵣₙₐₗ),
wherein the external control signal (Uₑₓₜₑᵣₙₐₗ) is obtained by using an estimation algorithm, based on estimating at least one of parameter associated with amount of inertia in a grid, grid strength, grid topology, and a grid impedance or admittance; and
resetting the at least one interfacing function by modifying the control gains (K and 1-K) or required control functionality based on the external control signal (Uₑₓₜₑᵣₙₐₗ) in a time-varying manner.

9. The method (400), according to any of the preceding claims, further comprising:
controlling the power conversion system (132) based on the generated unified control signal (U_{unified}).

10. The method (400) according to any of the preceding claims, comprising:
creating a reference modulation signal from the unified control signal;
producing gate signals from the reference modulation signal for gate driver circuit of the power conversion system (132);
applying the gate signals to one or more semiconductor devices in the power conversion system (132); and
producing a modified output voltage based on the gate signals.

11. The method (400) according to any of the preceding claims, comprising:
modifying at least one of a magnitude value, frequency value, and a phase angle value of the output voltage to produce the modified output voltage.

12. The method (400) according to any of the preceding claims, wherein, the first input control signal (U₁), the second input control signal (U₂), measurements, the unified control signals (U_{unified}), the external control signal (Uₑₓₜₑᵣₙₐₗ), and estimated parameters comprises one-dimensional signals and parameters or multi-dimensional signals or parameters vectors or matrices with consistent dimensions.

13. A power conversion system of a control system (100), comprising:
a processing circuitry, wherein the processing circuitry is configured to perform the method of claims 1-12.

14. A computer program product comprising instructions which, when the program is executed by a computing device comprising an I/O unit and a processing unit, wherein the I/O unit is operable to generate control signals for a power conversion system, and to measure voltages and currents of the power conversion system, and cause the computing device to function as controller for the power conversion system, and wherein the instructions causes the computing device to perform the method according to claim 1-12.
